Europäisches Patentamt

European Patent Office

Office européen des brevets

(11) Veröffentlichungsnummer : **0 042 095**
**B1**

(12) **EUROPÄISCHE PATENTSCHRIFT**

(45) Veröffentlichungstag der Patentschrift :
23.05.84

(51) Int. Cl.³ : **B 01 J   4/00**, B 01 J   8/44//
F23C11/02

(21) Anmeldenummer : **81104198.7**

(22) Anmeldetag : **02.06.81**

(54) **Verfahren und Vorrichtung zur Einspeisung von Schüttgütern in Wirbelschichtreaktoren.**

(30) Priorität : **14.06.80 DE 3022441**
**22.01.81 DE 3101942**

(43) Veröffentlichungstag der Anmeldung :
**23.12.81 Patentblatt 81/51**

(45) Bekanntmachung des Hinweises auf die Patenterteilung : **23.05.84 Patentblatt 84/21**

(84) Benannte Vertragsstaaten :
**BE DE FR GB IT NL**

(56) Entgegenhaltungen :
**GB-A- 1 407 833**
**US-A- 2 946 572**
**US-A- 3 385 199**
**US-A- 3 669 318**
**US-A- 4 071 304**
**US-H-   820 709**
**Die Akte enthält technische Angaben, die nach dem Eingang der Anmeldung eingereicht wurden und die nicht in dieser Patentschrift enthalten sind.**

(73) Patentinhaber : **Bergwerksverband GmbH**
**Franz-Fischer-Weg 61**
**D-4300 Essen 13 (DE)**

**Eschweiler Bergwerksverein AG**
**Roermonder Strasse 63**
**D-5120 Herzogenrath-Kohlscheid (DE)**

(72) Erfinder : **Schilling, Hans Dieter, Dr.**
**Pastoratsweg 43**
**D-4320 Hattingen 16 (DE)**
Erfinder : **Grabenhorst, Uirich, Dipl.-Ing.**
**Palz 11**
**D-5133 Gangelt (DE)**

## Beschreibung

Die Erfindung betrifft ein Verfahren und eine Vorrichtung gemäß dem Oberbegriff von Anspruch 1.

Beim Betrieb von Wirbelschichtreaktoren, wie z. B. Wirbelbettfeuerungen für feinkörnige Kohle, besteht immer die Gefahr, daß ein Teil der eingespeisten Schüttgüter, also des Wirbelbettmaterials und/oder des zu behandelnden, festen Stoffes, wie z. B. ein Brennstoff, mit den Wirbelgasen pneumatisch aus der Wirbelschicht ausgetragen wird, bevor es zu der gewünschten bzw. erwünscht vollständigen Reaktion gekommen ist, z. B. bevor die Schüttgutkörner vollständig ausgebrannt sind. Dies trifft insbesondere für Schüttgüter mit sehr kleinen Durchmessern zu, vor allem wenn diese in Verbindung mit größeren Partikeln zusammen in der Wirbelschicht bewegt werden, da dann die an ihnen angreifenden Schleppkräfte des Wirbelgasstromes größer sind als ihr Eigengewicht.

Da z. B. bei Wirbelbettfeuerungen von Kohle der Anteil kleiner Kohlekörner bei der Brennstoffeinspeisung nicht gering ist, kann dies zu einem unerwünscht niedrigen Ausbrenngrad führen. Der im Flugstaub verbliebene Kohlenstaubgehalt ist dann so hoch, daß eine Nachverbrennung in einer eigens dafür konstruierten Wirbelbettkammer erforderlich ist. — Natürlich sind solche Probleme auch bei anderen Schüttgütern und Reaktionen in der Wirbelschicht zu beobachten.

Darüber hinaus stellt aber auch die Gleichmäßigkeit der Schüttguteinspeisung vor allem dann ein Problem dar, wenn die Wirbelschichtreaktoren sehr groß werden und Konzentrationsgradiente in der Wirbelschicht zwecks Vergleichmäßigung der chemischen Reaktionen über das gesamte Wirbelbett möglichst gering sein sollen.

Es ist bereits bekannt, zur Einspeisung von Schüttgütern in Wirbelschichtreaktoren das Schüttgut von oben in das Wirbelbett zu werfen, beispielsweise mit hierfür konstruierten Wurfbeschickern an den Wänden des Reaktorraumes ; diese finden z. B. bei der Einspeisung von noch unbehandelter Kohle Anwendung. Sie haben den Nachteil eines begrenzten Aktionsradius und eines sich mehr oder minder ausgeprägt einstellenden Trenneffektes bei stark gestreutem Körnungsaufbau des Schüttgutes durch Ausbildung unterschiedlicher Wurfparabeln und durch Windsichtung.

Es ist weiter bekannt, Fallschächte im Bereich der Decke des Wirbelschichtreaktors vorzusehen. Hierbei ist aber die Schüttgutaufgabe nur punktuell und in solchen Bereichen möglich, die unterhalb einer festen Decke liegen ; da aber zumeist im Deckenbereich die Rauchgasabfuhr viel Platz erfordert, ist eine gleichmäßige Aufgabe mit Fallschächten nur bei seitlicher Rauchgasabführung möglich.

Schließlich ist es bekannt, das Schüttgut mittels Schnecken und Lufteindüsung in den unteren Teil des Wirbelbettes einzubringen ; hierzu befindet sich z. B. ein Strahlrohr mit seiner Mündung dicht über dem Anströmboden des Wirbelbettes. Dieses Vorgehen hat den Nachteil, daß die Schüttgutförderung auf dem Druckniveau der Wirbelschichtreaktion erfolgen muß und zur gleichmäßigen Beschickung sehr viele Düsen notwendig sind. Darüber hinaus muß das Schüttgut relativ fein gemahlen und getrocknet sein, was bei Brennstoffen nur Gefahr einer Selbstentzündung in den Zuführungsleitungen hervorruft. Schließlich können sich an den Einspeisestellen Gas-Blasen oder -Strähnen bilden, die bis zur Wirbelschichtoberfläche durchbrechen ; für die dabei mitgerissenen Partikel ist die Verweilzeit im Reaktor dann unerwünscht kurz.

Demnach besteht die Aufgabe der Erfindung bei einem Verfahren der eingangs genannten Art darin, die Verweilzeit der in einen Wirbelschichtreaktor eingespeisten Schüttgutpartikel sehr gleichmäßig zu gestalten, so daß auch feinere Partikel nicht zu früh wieder an der Wirbelschichtoberfläche erscheinen, also auch gründlich ausreagieren, und Konzentrationsgradienten in der Wirbelschicht weitgehend vermieden werden ; zu diesen Zwecken soll eine geeignete Vorrichtung zur Verfügung gestellt werden.

Die Aufgabe wird in bezug auf ein Verfahren der eingangs genannten Art durch die kennzeichnenden Merkmale des Anspruches 1 und, in bezug auf eine Vorrichtung zum Durchführen dieses Verfahrens, durch die kennzeichnenden Merkmale des Anspruches 2 gelöst. Besondere Ausgestaltungen und Weiterbildungen der Erfindung sind in den Ansprüchen 3 bis 20 wiedergegeben.

Die Art des Schüttgutes und der im Wirbelschichtreaktor vorgenommenen Behandlung hat im wesentlichen keinen Einfluß auf die Durchführbarkeit der Erfindung. Die Anwendung bei Brennstoffen, insbesondere Kohle, erbringt einen besonders großen Vorteil, da hierbei die Körnungsunterschiede der einzelnen Partikel bekanntlich recht groß sind.

Solange sich das eingespeiste Schüttgut innerhalb der Wirbelschicht befindet, ist eine Trennung zwischen feinkörnigem und grobkörnigem Brennstoff durch das Wirbelgas nicht in der Weise, wie bei einer Windsichtung, zu befürchten. Erst wenn Schüttgutpartikel, die durch ihr niedriges Gewicht Voraussetzungen für eine pneumatische Förderung erfüllen, an der Oberfläche der Wirbelschicht erscheinen, werden sie mit den abziehenden Gasen ausgetragen. — Es wurde nun gefunden, daß sich oberhalb von solchen Zonen des Anströmbodens, bei denen der Durchtritt der aufwärtsströmenden Wirbelgase vermindert oder gänzlich verhindert ist, in der Wirbelschicht eine abwärtsgerichtete Feststoffströmung auftritt. Schüttgutpartikel, die in diesem Bereich der Wirbelschicht aufgegeben werden, werden somit zunächst tief nach unten zu dem Anströmboden hin befördert. Damit wird die Verweilzeit (Tauchzeit) des Brennstoffes und damit die Reaktionszeit besonders für kleine Partikel erheblich vergrößert, was sich z. B. bei der Kohleverbrennung in einem höheren Ausbrennungsgrad niederschlägt.

Erfindungsgemäß werden diese nach unten gerichteten Strömungen dadurch gezielt erzeugt, daß man den Anströmboden so konstruiert, daß in geeigneten Zonen der Luftdurchtritt vermindert oder gänzlich verhindert wird. Um eine Ablagerung und Verbackung des Wirbelschichtmaterials zu verhindern, werden unmittelbar auf den genannten, beruhigten Zonen des Anströmbodens kegel-, pyramiden- oder prismenförmige Einbauten angeordnet, wobei erfindungsgemäß der Anstellwinkel der Mantelfläche der Einbauten größer als der Schüttwinkel des Wirbelschichtmaterials (Schüttgutpartikel) ist. Die Einspeiseeinrichtung ist senkrecht über den beruhigten Zonen angebracht, was prinzipiell innerhalb oder außerhalb der Wirbelschicht, vorzugsweise jedoch in Höhe ihrer Oberfläche, geschieht. Besonders wirkungsvoll ist die erfindungsgemäße Vorrichtung, wenn die beruhigten Zonen in Streifenform über den Anströmboden verteilt sind.

Die Gleichmäßigkeit der Schüttgutaufgabe wird erfindungsgemäß durch an den Einspeiseeinrichtungen in regelmäßigen Abständen nach unten gerichtete Durchlaßöffnungen erzielt. Dabei kann eine Kühlung, z. B. Wasserkühlung, der Einspeiseeinrichtung vorgesehen sein, was z. B. bei der erfindungsgemäßen Verwendung von Förderschnecken frühzeitige Reaktionen und Anbackungen vermeiden hilft. Auch können Vorkehrungen gegen Korrosion und Erosion an der Einspeiseeinrichtung vorgesehen sein.

Eine erfindungsgemäß als Schublanze ausgebildete Einspeiseeinrichtung ermöglicht es, ohne weitere Vorbehandlung auch feuchtes Schüttgut gleichmäßig in die Wirbelschicht einzuspeisen. Die Schublanze wird erfindungsgemäß so gestaltet, daß sie außerhalb des Wirbelschichtreaktors befüllbar und innerhalb des Wirbelschichtreaktors auf einmal entleebar ist. Dadurch ist die Verweilzeit der Schublanze innerhalb des Wirbelschichtreaktors nur sehr kurz.

Bei druckbeaufschlagten Wirbelschichten und in anderen Fällen, in denen ein Entweichen des Wirbelgases durch die Einspeiseeinrichtung unerwünscht ist, wird erfindungsgemäß zwischen der Schublanze und dem Wirbelschichtreaktor eine Abdichteinrichtung vorgesehen.

Eine erfindungsgemäße Takteinrichtung zum automatisierten Füllen, Schieben und Entleeren der Schublanze sorgt für einen reibungslosen, selbsttätigen Ablauf der einzelnen Bewegungsvorgänge, was z. B. einen programmierten Eingriff in den Beschickungsablauf des Wirbelschichtreaktors durch Variation der Taktzeit o. ä. gestattet.

Besonders vorteilhaft ist die Ausbildung von Modulbaugruppen, welche erfindungsgemäß zumindest aus der Schublanze und ihren Betätigungseinrichtungen bestehen. Dadurch können vorgefertigte Einheiten an beliebigen Stellen auch nachträglich in einen Wirbelschichtreaktor eingebaut werden.

Bei einer erfindungsgemäß einschaligen Bauweise der Schublanze besteht diese aus einer nach oben hin offenen Rinne, welche zum Entleeren um ihre Längsachse gedreht wird. Bei einer alternativ hierzu erfindungsgemäß zweischaligen Bauweise der Schublanze kann das Schüttgut in ihr eingeschlossen in den Wirbelschichtreaktor eingeführt und dann auf einmal ausgeschüttet werden, indem die Schalenhälften relativ zueinander verdreht oder verschoben werden ; hierdurch kann jegliche vorzeitige Reaktion oder ein Austragen lose aufliegender, kleiner Schüttgutpartikel beim Einschubvorgang vermieden werden.

Bei einer Schublanze, die erfindungsgemäß mindestens die doppelte Länge der zu ihr gehörenden Breite des Wirbelschichtreaktors aufweist, ist ein abwechselndes Arbeiten mit zwei Befülleinrichtungen möglich, die sich zu beiden Seiten des Wirbelschichtreaktors verbinden ; hierdurch kann der Entladetakt verdoppelt werden.

Zur weiteren Verbesserung der Schüttguteinspeisung werden erfindungsgemäß jalousieartige Einbauten oberhalb der Ränder der beruhigten Zonen vorgesehen. Hierdurch wird vermieden, daß Wirbelgasblasen in den Einzugsbereich der Schüttgutaufgabe, also in den Bereich oberhalb der beruhigten Zonen, gelangen ; auf diese Weise wird der angestrebte Bewegungsablauf der Schüttgutteilchen noch weniger gestört. Dabei ist es besonders bevorzugt, wenn die Einbauten erfindungsgemäß Flächen aufweisen, die zu den beruhigten Zonen hin abfallen ausgerichtet sind. Auf diese Weise wird die Abwärtsbewegung der eingespeisten Schüttgutpartikel bis möglichst zum Anströmboden hin unterstützt und der Eintritt von Wirbelgas von außerhalb der beruhigten Zonen in diese hinein noch wirkungsvoller vermieden.

Besonders vorteilhaft sind die erfindungsgemäßen, kühlmitteldurchflossenen Einbauten, die gegenüber ungekühlten längere Lebensdauer aufweisen und die Verwendung weniger temperaturbeständiger Materialien gestatten. Außerdem können diese Einbauten Bestandteil von im Wirbelschichtreaktor vorgesehenen Wärmetauschflächen sein. Besonders bei Wirbelbettfeuerungen kann hierdurch die Aufheizung von Wasser und/oder die Erzeugung von Dampf erfolgen und auf diese Weise die Einbauten in das System der eingetauchten Heizflächen oder Rohrregister integriert werden.

Die Einbauten haben den Vorteil, das Eindringen von Gasblasen in die beruhigten Zonen zu vermeiden. Dadurch läßt sich der Bewegungsablauf der Schüttgutpartikel im Wirbelbett zeitlich verlängern, was z. B. bei der Kohleverbrennung im Wirbelbett zur Verbesserung des Ausbrandes führt, also zur Verminderung des Kohlenstoffanteiles in der ausgetragenen Asche ; hierdurch werden solche Wirbelschichtverfahren in ihrer Wirtschaftlichkeit verbessert.

Schließlich wird durch die erfindungsgmäße Anordnung mehrerer Anströmböden mit dazugehörigen Einspeiseeinrichtungen in einem einzigen Wirbelschichtreaktor eine besonders günstige Nutzung des Wirbelgases und eine kompakte Bauweise des Reaktors möglich. Insbesondere können mehrere Wirbelbetten übereinander realisiert werden, ohne daß die bisher bekannten Schüttguteinspeiseprobleme auftreten.

Wegen der gleichmäßigen Verteilung bei der Schüttguteinspeisung und des Fehlens des Windsichtungseffektes können Wirbelschichtreaktoren nunmehr so groß gemacht werden, wie es die Festigkeit der in ihnen angeordneten Einspeisevorrichtungen gestattet, also wesentlich größer als bisher, was der Wirbelschichttechnik den Vorstoß in ihr bislang verschlossene Leistungsbereiche gestattet.

Weitere Ziele, Merkmale, Vorteile und Anwendungsmöglichkeiten der vorliegenden Erfindung ergeben sich aus der nachfolgenden Beschreibung von Ausführungsbeispielen anhand der beiligenden Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen :

Figur 1 einen Schnitt durch einen Wirbelschichtreaktor,

Figur 2 einen Wirbelschichtreaktor wie in Fig. 1 mit prismenförmigen Einbauten,

Figur 3 einen Wirbelschichtreaktor wie in Fig. 1, jedoch mit jalousieartigen Einbauten,

Figur 4 einen Schnitt durch einen Wirbelschichtreaktor mit Schublanze und Aufgabebunkern und

Figur 5 einen Schnitt durch einen Wirbelschichtreaktor mit mehreren Anströmböden und dazugehörigen Einspeiseeinrichtungen.

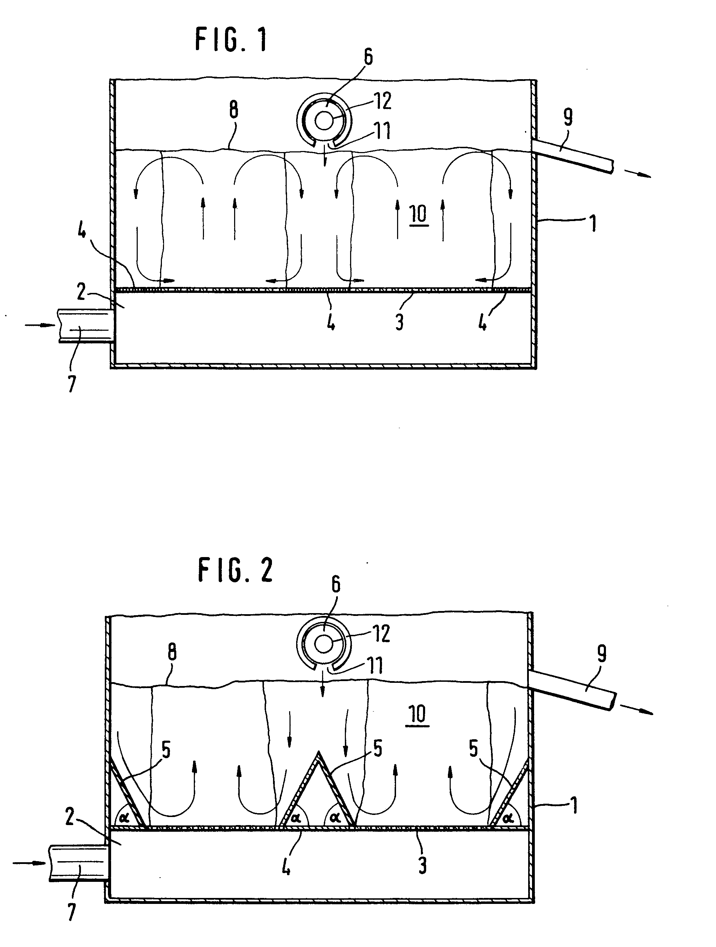

Gemäß Fig. 1 wird ein Wirbelschichtreaktor 1 ohne eingezeichnete Heizrohre schematisch dargestellt. Er weist in seinem Bodenbereich einen Windkasten 2 mit darüberliegendem Anströmboden 3 auf. Letzterer besitzt mehrere Zonen 4 (beruhigte Zonen) mit einer verminderten Gasdurchlässigkeit. Wenn Wirbelgas durch die Leitung 7 dem Windkasten 2 zugeführt wird, entsteht über den Zonen 4 eine vorwiegend nach unten gerichtete Teilchenströmung in der Wirbelschicht 10, wie es durch die Richtungspfeile angedeutet wird. Wird das Schüttgut mit Hilfe einer Einspeiseeinrichtung 6, hier eine Förderschnecke, über einer zentralen Zone 4 eingespeist, so wird es infolge der an dieser Stelle in der Wirbelschicht dominierenden, nach unten gerichteten Schleppkräfte unter die Oberfläche 8 der Wirbelschicht 10 bis annähernd auf den Anströmboden 3 hinabgezogen. Dort erfolgt eine Richtungsänderung zu den nicht beruhigten Zonen des Anströmbodens 3 und weiter nach oben hin, und zwar unter der Strahlwirkung der aufwärtsgerichteten Wirbelgase. Ausreagierte Schüttgutpartikel verlassen den Wirbelschichtreaktor 1 durch einen Überlaufabzug 9.

Gemäß Fig. 2 können die beruhigten Zonen 4 auch gänzlich den Wirbelgasdurchtritt verhindern und vorzugsweise längsgestreckte Einbauten 5 aufweisen, die sich über die ganze Breite des Anströmbodens hinziehen. Ihre Querschnitte können kegel-, pyramiden- oder prismenförmig sein. Die Anstellwinkel alpha der Seitenflächen der Einbauten 5 überschreiten, um Ablagerungen zu vermeiden, den Schüttwinkel des Wirbelschichtmaterials. Aufgrund der unterschiedlichen, für jede Wirbelschicht aber charakteristischen Horizontalvermischung werden die Einbauten 5 so über dem Anströmboden 3 verteilt, daß ihr paralleler Abstand nicht mehr als 2 m beträgt. Die Einspeiseeinrichtung 6 besteht wieder aus einer Förderschnecke, die oberhalb der Einbauten 5 knapp über der Wirbelschichtoberfläche angebracht ist und deren nach unten gerichtete Öffnungen 11 im Abstand von etwa 1 m hintereinander angeordnet sind. Ein Doppelmantel 12 der Einspeiseeinrichtung 6 ist von einem Kühlmedium, z. B. Kühlwasser, durchflossen, so daß die Temperatur der Einspeiseeinrichtung 6 weit unter der Reaktionstemperatur des eingespeisten Schüttgutes, z. B. unterhalb der Entgasungstemperatur von eingespeister Kohle, liegt.

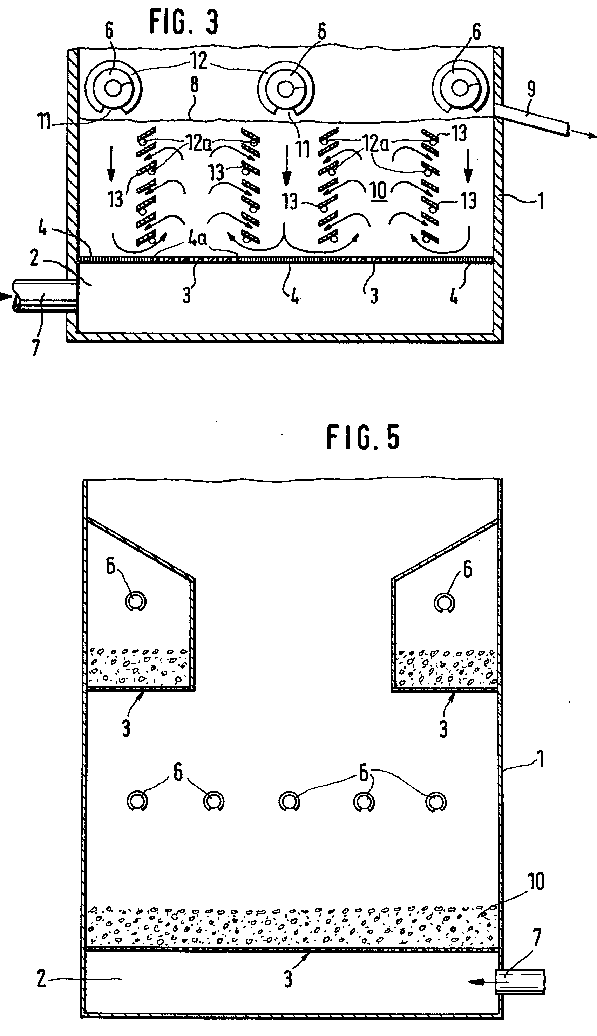

In Fig. 3 sind Einspeiseeinrichtungen 6 nicht nur über der zentralen beruhigten Zone 4, sondern auch oberhalb der beruhigten Zonen 4 in der Nähe der Reaktorwandung angeordnet. Die gewünschte anfängliche Abwärtsbewegung des frisch eingespeisten Schüttgutes wird durch jalousieartige Anbauten 13 oberhalb der Ränder 4a der Zonen 4 gefördert, wobei die einzelnen Lamellen auf die beruhigten Zonen 4 abfallen ausgerichtete Flächen aufweisen. Die jalousieartigen Einbauten 13 können auch mit kühlmitteldurchflossenen Rohren 12a ausgestattet sein oder völlig aus solchen Rohren bestehen, welche Teil von in der Wirbelschicht eingetauchten Rohrregistern sein können.

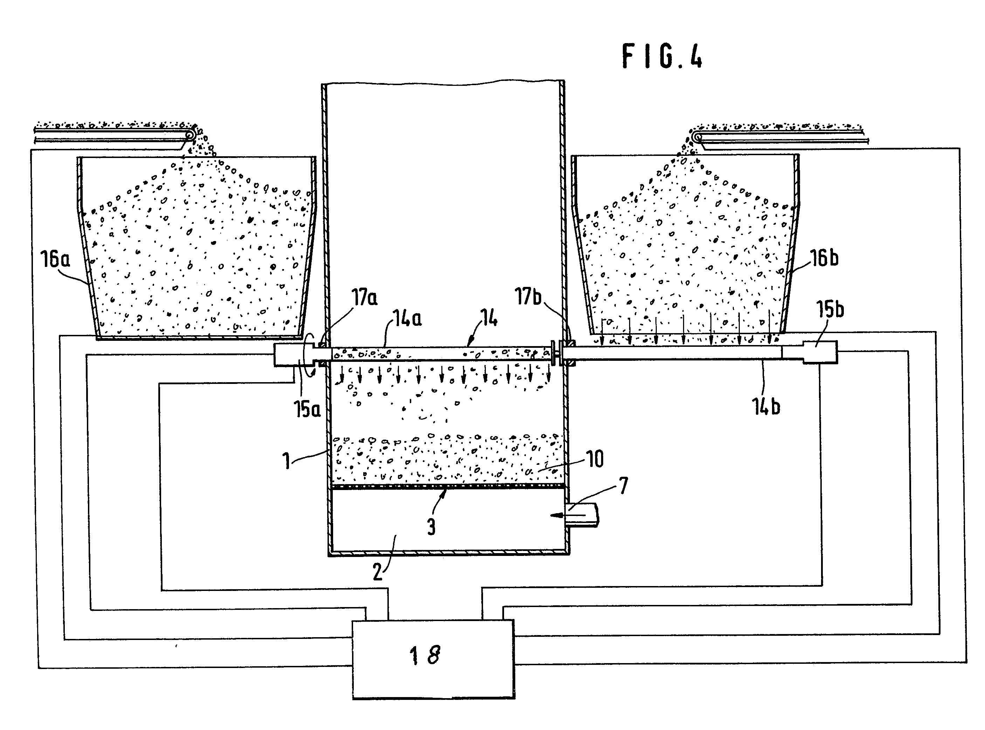

In Fig. 4 ist eine Schublanze 14 oberhalb der Wirbelschicht 10 angeordnet. Sie besteht aus zwei Teilen, die jeweils so lang sind, wie der Wirbelschichtreaktor breit. Während sich die Hälfte 14a der Schublanze 14 über der Wirbelschicht 10 befindet, um durch einen Drehantrieb 15a soweit gedreht zu werden, daß sie sich auf einmal und vollständig entleert, wird der außerhalb des Wirbelschichtreaktors sich befindende Teil 14b der Schublanze 14 durch Aufgabebunker 16b beaufschlagt. Hier nicht dargestellte Schubantriebe sorgen für das Verschieben von Lanzenteil 14a und 14b in die Entleer-, respektive in die Befüllposition, wobei Abdichteinrichtungen 17a und 17b zwischen der Schublanze 14 und dem Wirbelschichtreaktor 1 einen Gasaustausch verhindern. Der Befüll-, Schiebe- und Entleervorgang der Schublanzenteile 14a und 14b erfolgt durch eine Taktautomatik 18.

In Fig. 5 sind mehrere Anströmböden 3 über- und nebeneinander angeordnet und mit darüber befindlichen Einspeiseeinrichtungen 6 versehen, wobei beruhigte Zonen 4 im einzelnen nicht dargestellt wurden.

**Ansprüche**

1. Verfahren zur Einspeisung von Schüttgütern in Wirbelschichtreaktoren mit einem mit Wirbelgas beaufschlagten Anströmboden, dadurch gekennzeichnet, daß das Schüttgut in den Wirbelschichtreaktor oberhalb solcher Zonen des Anströmbodens eingespeist wird, bei denen der Durchtritt der aufwärtsströmenden Wirbelgase vermindert oder gänzlich verhindert ist.

2. Vorrichtung zur Durchführung des Verfahrens nach Anspruch 1, gekennzeichnet durch einen Anströmboden (3) mit Zonen (4) verminderter oder gänzlich fehlender Gasdurchlässigkeit und oberhalb dieser Zonen angeordneten Einspeiseeinrichtungen (6).

3. Vorrichtung nach Anspruch 2, dadurch gekennzeichnet, daß auf den Zonen (4) kegel-, pyramiden- oder prismenfömige Einbauten (5) angeordnet sind.

4. Vorrichtung nach Anspruch 3, dadurch gekennzeichnet, daß der Anstellwinkel (alpha) der Mantelflächen der Einbauten (5) größer ist als der Schüttwinkel des Wirbelschichtmaterials.

5. Vorrichtung nach einem oder mehreren der Ansprüche 2 bis 4, dadurch gekennzeichnet, daß die Zonen (4) in Streifenform über den Anströmboden (3) verteilt sind.

6. Vorrichtung nach einem oder mehreren der Ansprüche 2 bis 5, dadurch gekennzeichnet, daß an den Einspeiseeinrichtungen (6) in regelmäßigen Abständen nach unten gerichtete Durchlaßöffnungen (11) angeordnet sind.

7. Vorrichtung nach einem oder mehreren der Ansprüche 2 bis 6, dadurch gekennzeichnet, daß die Einspeiseeinrichtungen (6) gekühlt sind.

8. Vorrichtung nach einem oder mehreren der Ansprüche 2 bis 7, gekennzeichnet durch eine Förderschnecke als Einspeiseeinrichtung (6).

9. Vorrichtung nach einem oder mehreren der Ansprüche 2 bis 7, gekennzeichnet durch eine Schublanze (14) als Einspeiseeinrichtung (6).

10. Vorrichtung nach Anspruch 9, dadurch gekennzeichnet, daß die Schublanze (14) außerhalb des Wirbelschichtreaktors (1) befüllbar und innerhalb des Wirbelschichtreaktors (1) auf einmal entleerbar ist.

11. Vorrichtung nach Anspruch 9 oder 10, gekennzeichnet durch eine Abdichtungseinrichtung (17) zwischen der Schublanze (14) und dem Wirbelschichtreaktor (1).

12. Vorrichtung nach einem oder mehreren der Ansprüche 9 bis 11, gekennzeichnet durch eine Takteinrichtung zum automatisierten Befüllen, Schieben und Entleeren der Schublanze (14).

13. Vorrichtung nach einem oder mehreren der Ansprüche 9 bis 12, gekennzeichnet durch eine Modulbaugruppe, bestehend zumindest aus der Schublanze (14) und ihren Betätigungseinrichtungen.

14. Vorrichtung nach einem oder mehreren der Ansprüche 9 bis 13, gekennzeichnet durch einschalige Bauweise der Schublanze (14).

15. Vorrichtung nach einem oder mehreren der Ansprüche 9 bis 13, gekennzeichnet durch zwischenschalige Bauweise der Schublanze (14).

16. Vorrichtung nach einem oder mehreren der Ansprüche 9 bis 15, dadurch gekennzeichnet, daß die Schublanze (14) mindestens die doppelte Länge der zu ihr gehörenden Breite des Wirbelschichtreaktors aufweist.

17. Vorrichtung nach einem oder mehreren der Ansprüche 2 bis 16, gekennzeichnet durch jalousieartige Einbauten (13) oberhalb der Ränder (4a) der Zonen (4).

18. Vorrichtung nach Anspruch 17, gekennzeichnet durch auf die Zonen (4) abfallend ausgerichtete Flächen der jalousieartigen Einbauten (13).

19. Vorrichtung nach Anspruch 17 oder 18, dadurch gekennzeichnet, daß die jalousieartigen Einbauten (13) kühlmitteldurchflossen sind.

20. Vorrichtung nach einem oder mehreren der Ansprüche 2 bis 19, gekennzeichnet durch mehreren Anströmböden (3) mit dazugehörigen Einspeiseeinrichtungen (6) in einem einzigen Wirbelschichtreaktor (1).

**Claims**

1. A process for introducing bulk materials into fluidizedbed reactors with an inflow floor acted upon by fluidizing gas, characterized in that the bulk material is fed into the fluidized-bed reactor above zones of the inflow floor in which the passage of the upwardly flowing fluidizing gases is reduced or completely prevented.

2. Apparatus for performing the process according to claim 1, characterized by an inflow floor (3) with zones (4) of reduced gas permeability or completely lacking gas permeability, and feeding devices (6) arranged above these zones.

3. Apparatus according to claim 2, characterized in that conical, pyramidal, or prismatic assemblies (5) are arranged on the zones (4).

4. Apparatus according to claim 3, characterized in that the setting angle (alpha) of the surfaces of the assemblies (5) is greater than the angle of repose of the fluidized-bed material.

5. Apparatus according to one or more of claims 2 to 4, characterized in that the zones (4) are distributed in the form of strips over the inflow floor (3).

6. Apparatus according to one or more of claims 2 to 5, characterized in that downwardly directed outlet apertures (11) are disposed at regular intervals on the feeding devies (6).

7. Apparatus according to one or more of claims 2 to 6, characterized in that the feeding devices (6) are cooled.

8. Apparatus according to one or more of claims 2 to 7, characterized by a screw conveyor as a feeding device (6).

9. Apparatus according to one or more of claims 2 to 7, characterized by a thrust lance (14) as a feeding device (6).

10. Apparatus according to claim 9, characterized in that the thrust lance (14) can be filled outside the fluidized-bed reactor (1) and can be emptied at one go inside the fluidized-bed reactor (1).

11. Apparatus according to claim 9 or 10, characterized by a sealing device (17) between the thrust lance (14) and the fluidized-bed reactor (1).

12. Apparatus according to one or more of claims 9 to 11, characterized by a timing device for the automated filling, displacement, and emptying of the thrust lance (14).

13. Apparatus according to one or more of claims 9 to 12, characterized by a modular assembly consisting of at least the thrust lance (14) and its actuating devices.

14. Apparatus according to one or more of claims 9 to 13, characterized by single-shell design of the thrust lance (14).

15. Apparatus according to one or more of claims 9 to 13, characterized by subshell design of the thrust lance (14).

16. Apparatus according to one or more of claims 9 to 15, characterized in that the thrust lance (14) is at least twice as long as the associated width of the fluidized-bed reactor.

17. Apparatus according to one or more of claims 2 to 16, characterized by shutter-like assemblies (13) above the edges (4a) of the zones (4).

18. Apparatus according to claim 17, characterized by aligned faces of the shutter-like assemblies (13), sloping towards the zones (4).

19. Apparatus according to claim 17 or 18, characterized in that coolant flows through the shutter-like assemblies (13).

20. Apparatus according to one or more of claims 2 to 19, characterized by a plurality of inflow floors (3) with associated feeding devices (6) in a single fluidized-bed reactor (1).

## Revendications

1. Procédé d'introduction de produits en vrac dans des réacteurs à lit fluidisé comportant un fond de soufflage recevant un gaz de fluidisation, caractérisé en ce que le produit en vrac est introduit dans le réacteur à lit fluidisé au-dessus de zones du fond de soufflage où le passage des gaz de fluidisation s'écoulant vers le haut est réduit ou complètement empêché.

2. Dispositif destiné à la mise en œuvre du procédé selon la revendication 1, caractérisé par un fond de soufflage (3) comportant des zones (4) dont la perméabilité aux gaz est réduite ou entièrement inexistante et par des dispositifs d'alimentation (6) placés au-dessus de ces zones.

3. Dispositif selon la revendication 2, caractérisé en ce que des éléments coniques, pyramidaux ou prismatiques (5) sont placés sur les zones (4).

4. Dispositif selon la revendication 3, caractérisé en ce que l'angle d'inclinaison (alpha) des surfaces extérieures des éléments (5) est supérieur à l'angle de tallus de la matière constituant le lit fluidisé.

5. Dispositif selon l'une ou plusieurs des revendications 2 à 4, caractérisé en ce que les zones (4) sont réparties sous la forme de bandes sur le fond de soufflage (3).

6. Dispositif selon l'une ou plusieurs des revendications 2 à 5, caractérisé en ce que des ouvertures de passage (11) dirigées vers le bas sont prévus à intervalles réguliers dans les dispositifs d'alimentation (6).

7. Dispositif selon l'une ou plusieurs des revendications 2 à 6, caractérisé en ce que les dispositifs d'alimentation (6) sont refroidis.

8. Dispositif selon l'une ou plusieurs des revendications 2 à 7, caractérisé par une vis sans fin utilisée comme dispositif d'alimentation (6).

9. Dispositif selon l'une ou plusieurs des revendications 2 à 7, caractérisé par une lance coulissante (14) utilisée comme dispositif d'alimentation (6).

10. Dispositif selon la revendication 9, caractérisé en ce que la lance coulissante (14) peut être remplie à l'extérieur du réacteur (1) à lit fluidisé et être vidée d'un seul coup à l'intérieur du réacteur (1).

11. Dispositif selon la revendication 9 ou 10, caractérisé par un dispositif d'étanchéité (17) entre la lance coulissante (14) et le réacteur (1) à lit fluidisé.

12. Dispositif selon l'une ou plusieurs des revendications 9 à 11, caractérisé par un dispositif de commande de cadence pour le remplissage, le déplacement et le vidage automatiques de la lance coulissante (14).

13. Dispositif selon l'une ou plusieurs des revendications 9 à 12, caractérisé par un module de construction constitué au moins par la lance coulissante (14) et ses dispositifs d'actionnement.

14. Dispositif selon l'une ou plusieurs des revendications 9 à 13, caractérisé par une réalisation à une seule gouttière de la lance coulissante (14).

15 Dispositif selon l'une ou plusieurs des revendications 9 à 13, caractérisé par une réalisation à deux gouttières décalées de la lance coulissante (14).

16. Dispositif selon l'une ou plusieurs des revendications 9 à 15, caractérisé en ce que la lance coulissante (14) a une longueur au moins double de la largeur qui lui correspond du réacteur (1) à lit fluidisé.

17. Dispositif selon l'une ou plusieurs des revendications 2 à 16, caractérisé par des éléments (13) analogues à des jalousies, au-dessus des bords (4a) des zones (4).

18. Dispositif selon la revendication 17, caractérisé par des surfaces inclinées vers le bas, en direction des zones (4), des éléments (13) analogues à des jalousies.

19. Dispositif selon la revendication 17 ou 18, caractérisé en ce que les éléments (13) analogues à des jalousies sont traversés par un fluide réfrigérant.

20. Dispositif selon l'une ou plusieurs des revendications 2 à 19, caractérisé par plusieurs fonds de soufflage (3) avec les dispositifs d'alimentation correspondants (6) dans un seul et même réacteur (1) à lit fluidisé.

FIG. 1

FIG. 2

FIG. 3

FIG. 5

F I G . 4

0 042 095